## Europäisches Patentamt

## European Patent Office

## Office européen des brevets

(11) Veröffentlichungsnummer: **0 019 656**
**B1**

(12) **EUROPÄISCHE PATENTSCHRIFT**

(45) Veröffentlichungstag der Patentschrift: **03.11.82**

(21) Anmeldenummer: **79103014.1**

(22) Anmeldetag: **17.08.79**

(51) Int. Cl.³: **B 01 D 23/10,**
**B 01 D 23/20,**
**B 01 D 23/24, C 02 F 3/04,**
**C 02 F 3/10**

(54) Rückspülbare Filteranlage.

(30) Priorität: **31.05.79 CH 5086/79**

(43) Veröffentlichungstag der Anmeldung:
**10.12.80 Patentblatt 80/25**

(45) Bekanntmachung des Hinweises auf die Patenterteilung:
**03.11.82 Patentblatt 82/44**

(84) Benannte Vertragsstaaten:
**AT DE FR GB IT NL**

(56) Entgegenhaltungen:
**DE - C - 647 368**
**FR - A - 597 406**
**FR - A - 1 013 722**
**GB - A - 21 120**

(73) Patentinhaber: **GEBRÜDER SULZER**
**AKTIENGESELLSCHAFT**
**Zürcherstrasse 9**
**CH-8401 Winterthur (CH)**

(72) Erfinder: **Brulhart, Paul**
**Tösstalstrasse 64**
**CH-8400 Winterthur (CH)**
Erfinder: **Tylmann, Josef**
**Brunngasse**
**CH-8400 Winterthur (CH)**

(74) Vertreter: **Sparing, Nikolaus, Dipl.-Ing.**
**Rethelstrasse 123**
**D-4000 Düsseldorf 1 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

Rückspülbare Filteranlage

Die Erfindung betrifft eine rückspülbare Filteranlage zum Reinigen von Wasser, die wenigstens ein Filterfeld mit einem, eine Schicht körniger Filtermasse tragenden Filterboden umfasst, in oder auf dem zum Sammeln des Filtrats Drainage-Rohre verlegt sind, die in einen unter dem Filterboden-Niveau liegenden Sammelkanal für das Filtrat führen, wobei die Anlage mit einer Rückspülvorrichtung zur kombinierten Luft/Wasserspülung des Filterfeldes versehen ist, wobei weiterhin Zuführung und Verteilung der Rückspülmedien durch die Drainage-Rohre erfolgt, die mit in den Sammelkanal hineinragenden, mindestens eine Lufteinlassöffnung aufweisenden Anschlussrohren versehen sind, und wobei schliesslich die Zuführleitungen für die Rückspülmedien an den Sammelkanal angeschlossen sind.

Filteranlagen der vorliegenden Art, bei denen für die Ableitung des Filtrats aus dem körnigen Filtermaterial des Filterfeldes in oder auf dessen Boden Drainagerohre verlegt sind, sind aus der FR—A—597 406 bekannt; die Durchtrittsöffnungen in den Drainagerohren für das Filtrat bzw. die Spülmedien sind dabei nach oben und horizontal zur Seite gerichtet.

Werden diese Oeffnungen in an sich bekannter Weise mit Filterdüsen bestückt, deren Düsenköpfe gegen den Boden des Filterfeldes gerichtet sind, bereitet die Gleichverteilung der Spülluft erhebliche Schwierigkeiten, da die Durchströmquerschnitte der Düsen für eine Gleichverteilung der Luft zu gross sind, so dass durch die nahe dem Lufteintritt liegenden Düsen relativ zuviel Luft ausströmt; darüberhinaus ist infolge des grossen Gesamtströmungsquerschnitts die verbrauchte Spülluftmenge sehr gross.

Aufgabe der Erfindung ist es, für derartige Drainagerohr-Filter ein einfaches System für eine kombinierte Luft/Wasser-Rückspülung zu schaffen, bei dem die benötigte Luftmenge erheblich reduziert wird, so dass eine möglichst gleichmässige Verteilung der Luft über das ganze Filterfeld vor ihrem Austritt aus dem Drainagerohr in die körnige Filtermasse gewährleistet ist. Diese Aufgabe wird dadurch gelöst, dass in die Drainagerohre Filterdüsen mit nach unten gerichteten Düsenköpfen eingesetzt sind, in denen Durchströmöffnungen unterschiedlichen Gesamtquerschnitts für Spülluft und Spülwasser vorhanden sind, wobei mindestens die für das Wasser bestimmten Durchströmöffnungen grossen Querschnitts absperrbar sind.

Die Gleichverteilung der Luft sowohl in Längsrichtung — als solche sei die Richtung des Sammelkanals für das Filtrat bezeichnet — als auch in Querrichtung — womit die Längsrichtung der Drainagerohre gemeint sei — wird wie bei der bekannten Anlage durch die Ausbildung eines Doppelluft-Polsters vor ihrem Austritt in das Filterfeld erreicht; alle Drainagerohre sind mit beiden Spülmedien beaufschlagt, eine örtliche Trennung der Luft- von der Wasserspülung findet nicht statt.

Die erhebliche Reduzierung des Durchtrittsquerschnitts für die Luft in jeder einzelnen Düse gewährleistet durch den Aufbau eines Druckluft-Polsters die Gleichverteilung; durch den damit gleichzeitig stark reduzierten Gesamtquerschnitt ist die verbrauchte Luftmenge entscheidend reduziert.

Im folgenden wird die Erfindung anhand von Ausführungsbeispielen im Zusammenhang mit der Zeichnung näher erläutert.

Fig. 1 zeigt für ein erstes Ausführungsbeispiel einer erfindungsgemässen Filteranlage einen Längsschnitt I—I von Fig. 2 durch ein Filterfeld;

Fig. 2 ist der Schnitt II—II von Fig. 1;

Fig. 3 schliesslich zeigt eine Ausführungsform für eine spezielle Filterdüse.

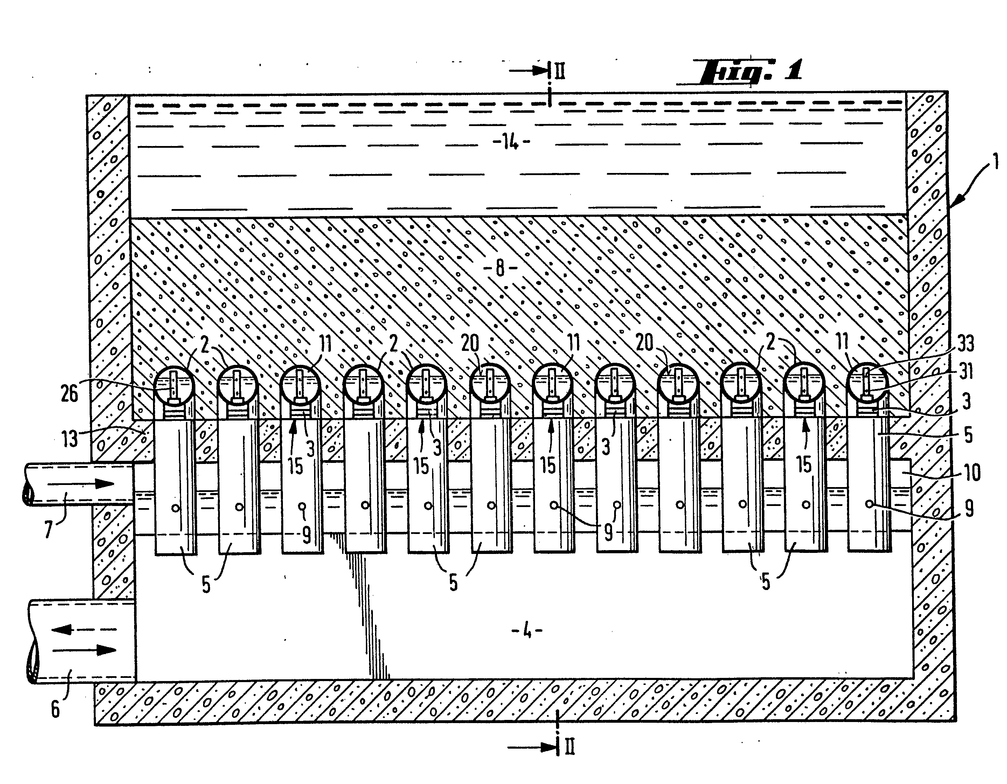

Auf dem Boden 13 (Fig. 1) eines aus Beton gefertigten Filterfeldes 1 ist eine körnige Filtermasse 8 gelagert, über der sich ein Ueberstauraum 14 für das zu filtrierende Rohwasser befindet. In die Filtermasse 8 eingebettet bedecken parallel zueinander verlaufende Drainagerohre 2 den Filterboden 13, die während des Filterbetriebs zum Sammeln und Abführen des Filtrats und während des Rückspülens zur Zuführung und Verteilung der Spülmedien dienen. Die Drainagerohre 2 sind mit Filterdüsen 15 versehen, die mit ihren Köpfen 3 nach unten orientiert sind, während die Düsenschäfte 26 nach oben zeigen.

Jedes Drainagerohr 2 hat ein vertikal durch den Filterboden 13 verlaufendes Anschlussoder Tauchrohr 5, das in einen Reinwassersammelkanal 4 mündet. Die Tauchrohre 5 haben in Abständen von ihrem freien Ende auf gleicher Niveauhöhe gelegene Luftöffnungen 9.

Aus dem Sammelkanal 4, der vertikal zur Achsrichtung der Drainagerohre 2 unter dem Boden 13 des Filterfeldes 1 über dessen ganze Länge verläuft, wird über eine Leitung 6 während des Filterbetriebs das Filtrat abgeführt. Die Leitung 6 ist gleichzeitig die Zuführleitung für Rückspülwasser, während die für das Rückspülen benötigte Luft über eine Leitung 7 dem Sammelkanal 4 zugeleitet wird.

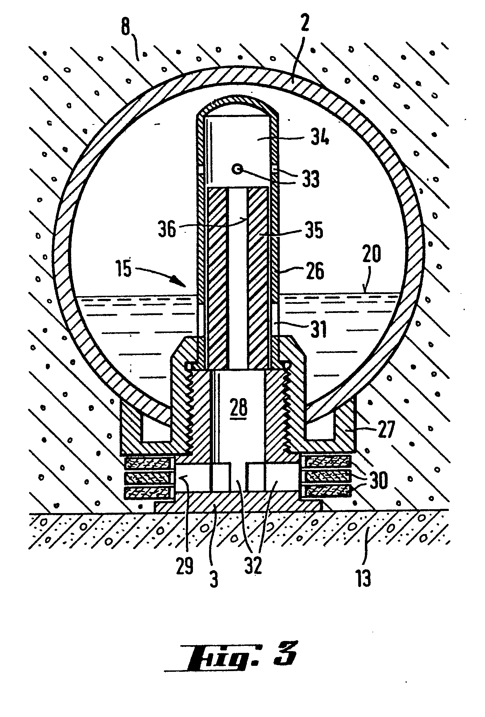

Um bei Anlagen mit nach unten orientierten Düsenköpfen 3 bei abwechselnder und/oder kombinierter Luft/Wasser-Spülung eine gleichmässige Verteilung der Spülmedien über das ganze Filterfeld zu erhalten, werden gemäss der Erfindung Filterdüsen 15 eingesetzt, bei denen für die Spülluft ein relativ geringer und für das Spülwasser ein relativ grosser Gesamtquerschnitt an Durchströmöffnungen 33 bzw. 31 (Fig. 3) zur Verfügung steht, wobei in Abhängigkeit von dem Flüssigkeitsniveau 20 in den Drainagerohren 2 die Durchströmöffnungen 31 für das Wasser selbsttätig verschlossen werden. Eine Ausführungsform einer Filterdüse der vorstehend geschilderten Art zeigt Fig. 3.

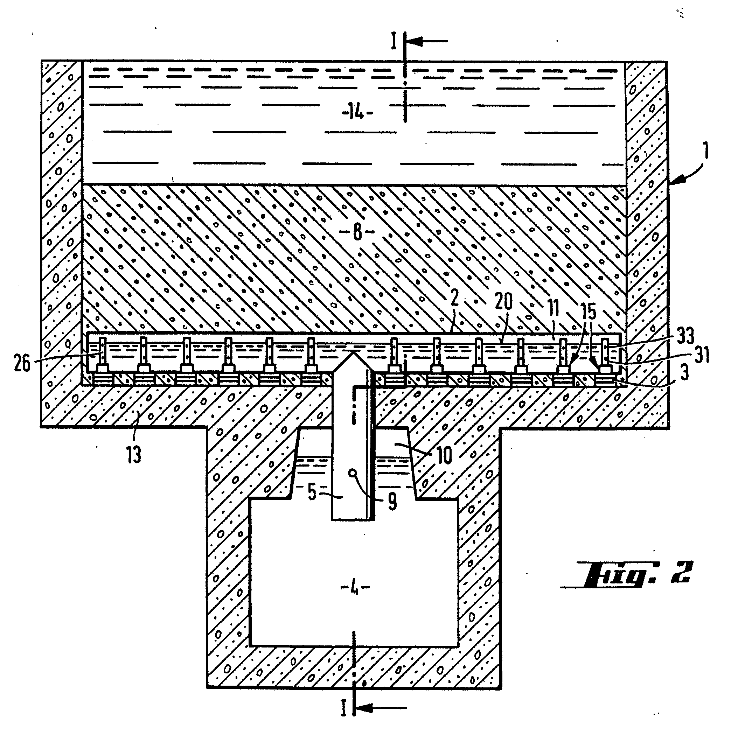

Das Drainagerohr 2, in das die Filterdüsen 15 eingesetzt sind, ist in Fig. 1 und 2 auf dem Boden 13 des Filterfeldes 1 mit den Düsenköpfen 3 gelagert; der Düsenschaft 26 (Fig. 3) im Innern des Rohres 2 ist nach oben gerichtet.

Für die Montage der Düsen 15 ist durch Bohrungen im Drainagerohr 2 zunächst ein Zwischen- oder Auflagering 27 gesteckt, der eine zentrale Gewindebohrung aufweist. Diese geht an ihrem inneren oberen Ende in eine Durchströmöffnung geringeren Querschnitts über. Gegen den so entstehenden Absatz stösst ein Flansch des weiter in das Rohr hineinragenden, durch die Durchströmöffnung hindurch gesteckten Düsenschaftes 26. Der Schaft 26 ist durch den in die Gewindebohrung des Zwischenrings 27 eingeschraubten Düsenkopf 3 gehalten, durch den gleichzeitig Filterscheiben 30 auf die Aussenseite des Zwischenrings 27 gepresst werden.

Der innen hohle Düsenschaft 26 hat nahe seinem unteren Ende erste Durchströmöffnungen 31, die in Verbindung mit einem vertikalen Hohlraum 28 und den mit Rippen 32 versehenen horizontalen Querverbindungen 29 im Düsenkopf 3 einen ersten Strömungsweg zwischen dem Filterfeld 1 und dem Innern des Drainagerohrs 2 bilden, durch den beim Filterbetrieb Filtrat in das Drainagerohr 2 und beim Spülen Rückspülflüssigkeit in das Filterfeld 1 fliessen. Die für die Flüssigkeitsströmung bestimmten Durchströmöffnungen 31 haben einen relativ grossen Gesamtströmungsquerschnitt.

Auf einer Niveauhöhe oberhalb der ersten Durchströmöffnung 31 hat der Düsenschaft 26 zweite Durchströmöffnungen 33 mit gegenüber dem Querschnitt der ersten Durchströmöffnungen 31 relativ geringem Gesamtströmungsquerschnitt.

Als Mittel für das Verschliessen der ersten Durchströmöffnungen 31 ist im Hohlraum 34 des Düsenschaftes 26 ein mit der Niveauhöhe 20 des Wassers im Drainagerohr 2 verschiebbarer Schwimmerkolben 35 vorgesehen, durch den der Strömungsweg durch die Durchströmöffnungen 31 bei abgesenktem Wasserniveau 20 im Drainagerohr 2 verschlossen und gleichzeitig aus dem Luftraum über dem abgesenkten Wasserniveau 20 durch die Durchströmöffnungen 33 und einen zentralen Kanal 36 im Schwimmerkolben 35 ein Strömungsweg für Luft zum Hohlraum 28 des Düsenkopfes 3 geöffnet wird; denn Luft für eine Luftspülung strömt auf dem zweiten Strömungsweg, also durch die Oeffnungen 33 und den Kanal 36 nur in den Hohlraum 28 und weiter durch den Hohlraum 29 und die Filterscheiben 30 in das Filterfeld 1, wenn die Durchströmöffnungen 31 verschlossen sind.

Das Verschliessen und die Freigabe der Durchströmöffnungen 31 erfolgt selbsttätig durch das fallende bzw. steigende Wasserniveau 20 im Drainagerohr 2; denn bei niedrigem Flüssigkeitsstand vermag der Auftrieb den Schwimmerkolben 35 nicht mehr zu tragen, dieser sinkt daher im Hohlraum 34 so weit nach unten, dass er auf dem Düsenkopf 3 aufliegt, der gegenüber dem Düsenschaft 26 etwas nach innen vorspringt. Bei wieder steigendem Flüssigkeitsniveau beginnt der Schwimmerkolben 35 aufzuschwimmen; von einer gewissen Niveauhöhe ab gibt er daher die Durchströmöffnungen 31 wieder frei, während die Luftströmung durch die Oeffnungen 33 gleichzeitig unterbrochen wird.

Eine im Rahmen der bekannten Luft/Wasser-Spülung durchzuführende Luftspülung nimmt mit einer Anlage gemäss dem beschriebenen ersten Ausführungsbeispiel folgenden Verlauf:

Die Spülluft wird über die Leitung 7 in den Kanal 5 gefördert. Da diese Luft erst durch die Lufteintrittslöcher 9 in die Anschlussrohre 4 gelangen kann, muss vorerst das im Kanal 5 befindliche Wasser bis auf die Höhe dieser Löcher 9 verdrängt werden und es kommt zur Bildung eines ersten Luftpolsters 10, wodurch eine gleichmässige Verteilung der Luft über die ganze Länge des Filterfeldes, d.h. in Längsrichtung des Sammelkanals 5, erzwungen wird.

Erreicht das Luftpolster 10 die Lufteintrittslöcher 9, so strömt die Luft gleichzeitig durch die Anschlussrohre 4 in die Drainagerohre 2. Um zu den Düsenköpfen 3 zu gelangen, muss zunächst auch das in den Drainagerohren 2 befindliche Wasser verdrängt werden; es kommt zur Bildung eines zweiten Luftpolsters 11 in Längsrichtung der Drainagerohre, d.h. in Querrichtung des Filterfeldes.

Erreichen die Luftpolster 11 die Lufteintrittsöffnungen 33 der Düsen 5, so strömt die Luft gleichzeitig und gleichmässig verteilt aus allen Düsenköpfen 3 in die Filtermasse 8.

Ein Zusammenbrechen des Luftpolsters in den Drainagerohren 2 — was durch ein Abströmen der gesamten zugeführten Luft durch die relativ grossen für das Wasser bestimmten und ausgelegten Durchströmöffnungen 31 in den dem Tauchoder Anschlussrohr 4 am nächsten liegenden Düsen 15 eintreten könnte — wird dabei dadurch verhindert, dass die Durchströmöffnungen 31 für das Wasser bei durch den steigenden Luftdruck hervorgerufenem Absinken des Wasserspiegels in den Drainagerohren 2 von dem Schwimmerkolben 35 verschlossen werden, so dass für den Lufteintritt in die Filterdüsen 15 nur die engen Durchströmöffnungen 33 zur Verfügung stehen.

## Patentanspruch

Rückspülbare Filteranlage zum Reinigen von Wasser, die wenigstens ein Filterfeld mit einem, eine Schicht körniger Filtermasse tragenden Filterboden umfasst, in oder auf dem zum Sammeln des Filtrats Drainagerohre verlegt sind, die in einen unter dem Filterboden-Niveau liegenden Sammelkanal für das Filtrat führen, wobei die Anlage mit einer Rückspülvorrichtung zur kombinierten Luft/Wasserspülung des Filterfeldes versehen ist, wobei weiterhin Zuführung und Verteilung der Rückspülmedien durch die Drainagerohre erfolgt, die mit in den Sammelkanal hineinragenden, mindestens eine Lufteinlassöffnung aufweisenden Anschlussrohren versehen sind, und wobei schliesslich die Zuführleitungen für die Rückspülmedien an den Sammelkanal angeschlossen sind, dadurch gekennzeichnet, dass in die Drainagerohre (2) Filterdüsen (15) mit nach unten gerichteten Düsenköpfen (3) eingesetzt sind, in denen Durchströmöffnungen (33 bzw. 31) unterschiedlichen Gesamtquerschnitts für Spülluft und Spülwasser vorhanden sind, wobei mindestens die für das Wasser bestimmten Durchströmöffnungen (31) grossen Querschnitts absperrbar sind.

### Revendication

Installation de filtration lavable à contre-courant pour purifier de l'eau, qui comprend au moins une étendue de filtration ayant un fond de filtration portant une couche d'une masse granulaire de filtration et dans lequel ou sur lequel sont placés pour recueillir le filtrat des tubes de drainage qui mènent dans un canal collecteur se trouvant en dessous du niveau du fond de filtration, l'installation étant pourvue d'un dispositif de lavage à contre-courant pour le lavage combiné aireau de l'étendue de filtration, et les milieux de lavage à contre-courant étant amenés et distribués par les tubes de drainage qui sont équipés de tubes de raccordement présentant au moins un orifice d'entrée d'air et pénétrant dans le canal collecteur, et les conduites d'arrivée des milieux de lavage à contre-courant étant finalement raccordées au canal collecteur, installation caractérisée en ce qu'on introduit dans les tubes de drainage (2) des buses de filtration (15) ayant des têtes (3) dirigées vers le bas dans lesquelles sont disponibles des orifices de passage (33 ou 31) de sections transversales totales différentes pour l'air de lavage et l'eau de lavage, au moins les orifices (31) de passage destinés à l'eau et de section transversale importante pouvant alors être bloqués.

### Claim

A backwashable filter installation for the purification of water, comprising at least one filter bed having a base bearing a layer of granular filter material, in or on which base drainage pipes are laid for collecting the filtrate, said pipes leading into a filtrate collecting duct beneath the level of the filter bed, the installation being provided with a backwashing system for combined air and water washing of the filter bed, the backwashing media further being supplied and distributed through the drainage pipes, which are provided with connecting pipes extending into the collecting duct and having at least one air inlet aperture, and the feed pipes for the backwashing medium are connected to the collecting duct, characterised in that strainers (15) with the strainer heads (3) extending downwards are fitted into the drainage pipes (2), said heads being formed with passage apertures (33 and 31) of different total cross-section for washing air and washing water, at least the large cross-section passage apertures (31) intended for the water being closable.

**Fig. 1**

Fig. 2

Fig. 3